# NEW EUROPEAN PATENT SPECIFICATION

(11) **EP 1 085 825 B2**
(45) Date of publication and mention of the opposition decision: **06.07.2011**
(45) Mention of the grant of the patent: 12.03.2003
(21) Application number: 99926595.2
(22) Date of filing: 11.06.1999
(51) Int. Cl.: A23L 1/314, A23C 9/123

(54) **NOVEL MEAT PRODUCT COMPRISING YOGURT AND PROCESS FOR PRODUCING THE SAME**
FLEISCHPRODUKT MIT JOGURT UND VERFAHREN ZUR SEINER HERSTELLUNG
PRODUIT À BASE DE VIANDE CONTENANT DU YAOURT ET SON PROCÉDÉ DE PRÉPARATION

(30) Priority: 18.06.1998 DE 19826978
(43) Date of publication of application: 28.03.2001
(73) Proprietor: BERNARD MATTHEWS LIMITED, Norwich Norfolk, NR9 5QD (GB)
(72) Inventor: MATTHEWS, Bernard, Trevor, Norwich, Norfolk NR9 5QD (GB); JOLL, David, John, Corpusty, Norfolk NR11 6QF (GB); KOPPERS, Werner, 26215 Wiefelstede (DE); BUSE, Friedrich, 26215 Oldenburg (DE)
(74) Representative: Bradley, Adrian
(86) International application number: PCT/GB1999/001854
(87) International publication number: WO 1999/065338

(56) References cited:
- EP-A- 0 649 598
- EP-A1- 0 029 503
- EP-A2- 0 754 408
- EP-B1- 0 061 914
- WO-A-99/21438
- WO-A1-99/65338
- DE-A1- 19 826 978
- DE-B2- 1 692 573
- DATABASE WPI Section Ch, Week 9546 Derwent Publications Ltd., London, GB; Class D13, AN 88-059795 XP002114604 & JP 07 095915 B (MEIJI MILK PROD CO LTD), 18 October 1995 (1995-10-18)
- 'Product specification " Hänchenbrustfilet Tandoori"', 15 March 1995 article 'art.8570 (19.09.94)(20.04.94)'
- 'Eismann Catalogue', 1995 article 'coverpage and p.77', page 77
- 'Tubular foil bag of "Hähnchenbru',
- 'Label of packaging of "Hähnchenbrustfilet Tandoori"',
- 'Product specicfication "Hähnchenbrustfilet Tandoori"', 29 June 1994
- 'Comparative test regarding "Hähnchenbrustfilet Tandoori"',
- 'Minutes of the joint panel of Argenet', 17 October 1990
- 'Römpp Lexikon Lebensmittelchemie', 1995 pages 429 - 430
- WALTERS B.S.: 'Blood and pink color defects in poultry muscle' DISSERTATION ABSTRACTS INTERNATIONAL vol. 54, no. 10, 1994, pages 4980 - 4981
- BATER B. ET AL.: 'Quality characteristics of hydrocolloid-added ovenroasted turkey breasts' ABSTRACT OF JOURNAL OF FOOD SCIENCE vol. 75, no. 5, 1992, pages 1068 - 1070
- 'Comparative test "Putenbrust mit Joghurt injektiert"',
- 'The Classic 1000 Indian Recipes', 1994, STRATHCARN PUBLISHING LTD. article 'Coverpage, p.4,5', pages 164 - 165
- MADHUR JAFFREY: 'Indisch Kochen', 1999, DIE WERKSTATT, BERLIN article 'pp 1-5, 18,19,30', pages 87 - 91
- 'Test protocol "Hähnchenbrustfilet, mit Joghurt Marinade,frisch"', 06 February 2009

## Description

The present invention relates to a novel meat product comprising yogurt. In particular, the present invention relates to a meat product comprising a whole piece of muscle meat that is injected with yogurt. The present invention also relates to a process for producing a meat product injected with yogurt.

Yogurt and other fermented milk products are used in many traditional recipes for marinading and/or pickling meat. For example, it is well known to marinade venison in sour buttermilk.

US-A-5,538,743 discloses a pet food containing a significant amount of an hydrolysed fermented dairy product, as well as meat, meat products or meat substitute. The meat comprises less than 25% of the final product and can be any one of or a mixture of comminuted meat, comminuted offal (such as kidneys, liver etc.) and soya products (meat substitute). The hydrolysed fermented dairy product comprises hydrolysed milk fermented with one or more of lactobacillus, bulgaricus, bifido and streptococcus acidophillus bacteria as well as vitamins and minerals. The advantage of this meat product is that it is cheap and is designed to provide a nutritional diet for domestic animals.

Russian Patent Specification No. 2084184 discloses a fermented meat product obtained by pickling the meat product in the presence of a fermented milk product.

According to these recipes, the fermented milk product is used to impart a sharp, tangy flavour to a marinaded, outer zone of the meat product.

JP 63-14656A discloses a meat product, for example, a sausage or hamburger product, composed of minced meat and a fermented milk product. The fermented milk is distributed substantially homogeneously throughout the product. The bacterium used to ferment the milk is the anaerobic bifidus bacteria. Hence, under normal storage conditions (i.e. aerobic conditions) the bacteria have little metabolic activity. The presence of these bacteria inhibit the growth of unwanted bacteria during storage, thus prolonging the storage life of the product.

WO-A-99/21438 discloses a cooked sausage comprising a mixture of meat emulsion and mild yogurt, wherein the yogurt is substantially homogeneously dispersed through the meat emulsion, and the mixture has a pH of about 5.5 or more. The water retaining capacity of the meat is thus retained, providing a sausage having desirable organoleptic qualities. Said mild yogurt may be prepared from milk mixtures by inoculation by slow working yogurt started cultures. An advantage of the sausage product of WO-A-99/21438 is that it contains fewer calories per unit weight than conventional meat sausages and is generally easier to digest.

An object of the present invention is to provide a novel meat product.

In particular, it is an object of the present invention to provide a novel meat product comprising whole pieces of muscle meat, that is meat retaining its natural structure and consistency.

A further object of the present invention is to provide a novel meat product comprising a fermented milk product, which is thus lighter in terms of its calorie-content per unit weight as compared with unprocessed meat and is easier to digest.

Yet another object of the present invention is to provide a raw meat product which has a longer shelf life as compared with natural cuts of raw meat.

Yet another object of the present invention is to provide a meat product having a novel aroma and/or taste.

Yet another object of the present invention is provide an industrial process for producing such a meat product.

According to one aspect of the present invention therefore, there is provided a meat product comprising a piece of whole muscle meat, characterised in that said piece comprises yogurt distributed substantially uniformly throughout the piece, and said yogurt has a pH at less than 4.0.

According to another aspect of the present invention, there is provided a process for making a meat product, characterised by injecting a piece of whole muscle meat with yogurt, and thereafter mechanically processing the meat to distribute the yogurt substantially uniformly throughout the meat.

The injected yogurt may be distributed further throughout the piece of meat by mechanically tenderising and/or and/or tumbling. Said product may comprise 5-50% by weight of injected yogurt. It has been found that by injecting yogurt into a: whole piece of muscle meat in accordance with the invention, pores and cavities within the piece may be filled with yogurt and, where higher proportions of yogurt are used, the piece may become saturated with yogurt. The invention thus provides a meat product having attractive. novel organoleptic properties. By the addition of yogurt the calorie-content per unit weight of the product is reduced as compared with natural meat, and the product as a whole may be generally easier to digest. As a further advantage, the mechanical processing of the meat after injection assists in disrupting the structure of the meat, especially proteins, which may thus be opened. and free water within the meat may become incorporated properly within the meat structure. As a result, meat processed in accordance with the invention will typically be tender and juicy after cooking.

The product of the present invention may be cooked as part of the production process, or alternatively the product may be supplied raw for cooking by a consumer.

In some embodiments, the yogurt may have a pH in the range of 3.6 to 3.8 or 3.9. By using yogurt having such a low pH, the acidity of the product as a whole is increased which tends to suppress the proliferation of unwanted microorganisms within the meat before cooking. Thus, the product of the present invention may have a longer shelf as compared with natural raw meat.

On the other hand, where the product is to be cooked as part of the production process, e.g. for sale as a cooked cold cut, it is preferable to use yogurt for injection that has a pH which is selected such that. when mixed with the meat, the pH of the product does not fall too close to the isoelectric point of the meat. To this end, the overall pH of the product should be not less than 5.0, and is preferably at least 5.5. The pH of the yogurt which should be used to ensure that the pH of the product falls within these ranges will obviously vary depending on how much yogurt is incorporated into the product. By maintaining the pH of the product as a whole above the isoelectric point of the meat, the loss of moisture and water from the product during cooking is minimised. On the other hand, if the pH of the product falls below about pH 5.5 towards the isoelectric point of the meat, then the water-retaining capacity of the meat is reduced. with the result that the juiciness and texture of the final product is impaired.

The product in accordance with the present invention may therefore be injected with a mild yogurt that is prepared in the traditional manner, but is used in the process of the invention before fermentation is fully completed. Thus, after inoculation of a milk mixture, the pH may be monitored until it reaches a desired value. The mild yogurt produced as a result is then made ready for use in the method of the present invention.

Prior to injection, the yogurt may be treated to destroy the yogurt cultures and any other bacteria present in the yogurt. In some embodiments, fermentation of the yogurt may be quenched by cooling the yogurt to a temperature in the range -2 to 6°C, preferably about -1°C. The yogurt may be cooled rapidly with liquid nitrogen or using a plate-heat exchanger. Alternatively, the yogurt may be heated to a temperature in the range 65 to 70 °C, for instance by using a heat exchanger instead of cooled.

In order to assist in controlling accurately the pH of the yogurt to be injected into the meat piece, slow-working yogurt starter cultures are preferably used. Such slow-working yogurt starter cultures may comprise *Lacidophilus.* Bifidobacteria. and S.thermophilus. Further. the yogurt is preferably stirred continuously before use to allow accurate pH control.

In some embodiments, the mild yogurt may comprise an edible alkaline additive to neutralise the acidity of the yogurt. Said alkaline additive may comprise, for example carbonated soda. Phosphates could also be used to stabilise the mixture.

In a further aspect of the present invention. the yogurt injected into the meat piece may comprise active yogurt with live yogurt cultures. so that the resultant yogurt cultures in the product act as protective cultures which hinder the reproduction of undesirable microorganisms in the meat. Said live yogurt cultures may be found in yogurt having a low pH for injection into meat intended to be supplied raw, as well as in yogurt having a relatively high pH for injection into meat intended to be cooked as part of the manufacturing process. Prior to injection, the yogurt may be combined with additional condiments and/or flavourings. Said yogurt may comprise 5 to 25% by weight (based on the yogurt) of such additional flavourings and condiments. For example, the yogurt may be mixed with seasonings such as salt and pepper, sodium ascorbate, honey or other flavourings such as smoke flavour or roast flavour.

In some embodiments, said yogurt may comprise up to 10% by weight of a pre-biotic additive such as a non-digestible carbohydrate. An example of a pre-biotic carbohydrate is inulin. The yogurt may comprise 1-10 %wt inulin, which selectively promotes the activity of some health promoting bacteria in the colon.

Said yogurt may be injected into the meat piece using a single needle injector or a multi-needle injector. A suitable multi-needle injector is the injector that is commercially available from Schröder Maschinenbau GmbH under the trade name "Pökelinjektor N120". The yogurt may be injected at a pressure of about 0.9 to 3.0 bar depending on the type of meat and injection rate. The meat may be injected more than once. In some embodiments, the meat may be injected using tenderising needles.

After injection and mechanical processing, the product may be directly packaged if it is to be sold raw. Alternatively, the product may be coated with spices and/or marinades and optionally cut prior to packaging. As a further alternative, the product may be cooked and optionally smoked and then packaged. As with the raw product, the meat may be further divided into portions or slices prior to packaging as required. In some embodiments, the product may be shaped into any desired shape. For instance, the meat, after injection and tumbling, may be extruded to form an elongate log of generally circular or oval cross section using apparatus of the kind described in EP-A-0024790 or EP-A-0850566.

The meat piece may comprise meat from any kind of slaughtered animal. For instance, the meat may comprise red meat, such, for example, as beef, venison, lamb or pork; or poultry, such, for example, as turkey or chicken.

Following is a description by way of example only with reference to the accompanying drawings of methods of carrying the present invention into effect.

In the drawings:

Figure 1 is a flow diagram of a process in accordance with the present invention.

Figure 2a is a schematic plan view of a meat product in accordance with the present invention.

Figure 2b is a schematic isometric view of a slice of the meat product of Figure 2a.

Figure 3a is a schematic side view of a different product in accordance with the present invention.

Figure 3b is a schematic isometric view of a slice of the product of Figure 3a.

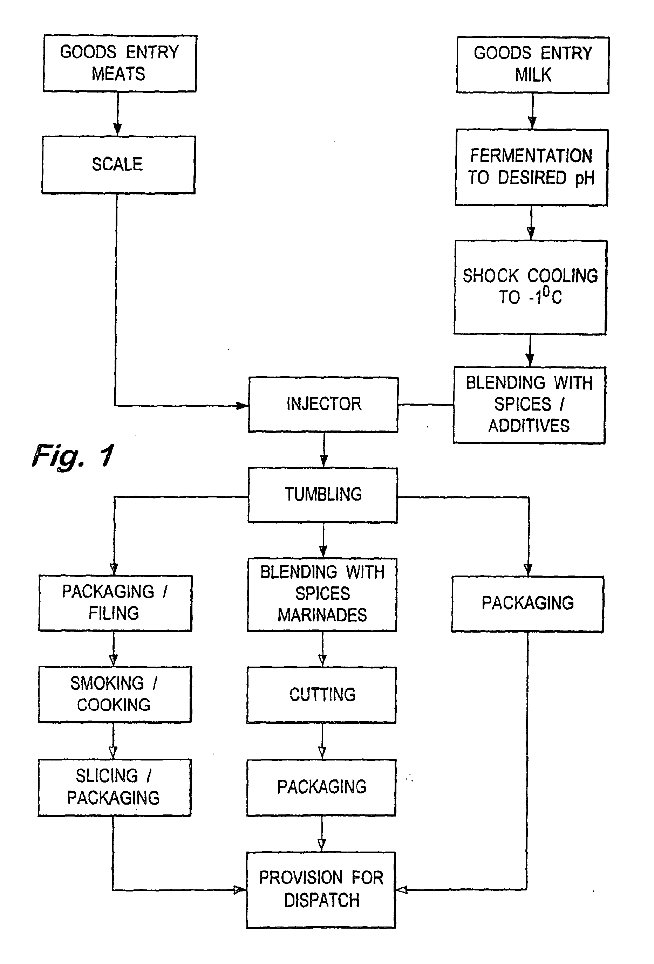

With reference to Figure 1, yogurt is manufactured substantially according to the traditional manner using milk that is clarified and separated into cream and skimmed milk and then standardised to achieve a desired fat content. The desired proportions of cream and skimmed milk are then blended together, and the mixture is pasteurised and homogenised. The homogenised mixture is heated to a temperature in the range 85 to 90°C for about 30 minutes, and is then cooled to a temperature in the range about 30 to 50°C. After cooling the mixture is inoculated with yogurt starter cultures. The mixture is allowed to ferment for about 4 to 6 hours at 30-50°C, typically about 43°C, such that the mixture coagulates to form yogurt. The pH of the mixture is carefully monitored until a desired pH is reached. For products that are intended to be supplied raw to a consumer, the yogurt may be fermented until it is fully fermented in the range 3.6 to 5.1, preferably about 3.8 to 3.9. Alternatively, for meat products intended to be cooked as part of the manufacturing process and then supplied to a consumer for reheating, yogurt may be fermented to a relatively higher pH in the range of 4.8 to 5.1 using a slow working starter culture comprising S.thermophilus L.acidophilus and Bifidobacteria.

Once the desired yogurt pH has been reached, the yogurt is subjected to shock freezing to a temperature of -1°C to prevent further fermentation of the yogurt. For such shock freezing, liquid nitrogen or a plate-heat exchanger may be used. As an alternative the yogurt could be heated using a heat exchanger to a temperature in the range 65 to 70 °C. This is especially convenient for yogurt having a low pH for injection into meat that is to be sold raw.

If desired. the fermented yogurt may then be blended with additional spices or other additives.

Contemporaneously, raw meat is provided in the form of whole muscle meat pieces. Said pieces may be mechanically divided to form smaller pieces such as cubes or strips. The meat is weighed into portions of a predetermined weight, and is then combined with the yogurt using a multi needle injector, such as the " Pokelinjektor N120" available from Schröder Maschinenbau GmbH. The yogurt, with optional additives, is injected into the meat at a pressure of about 0.9 to 3.0 bar depending on the type of meat and the size of the needles. After injection of a predetermined amount of yogurt, the product is tumbled to distribute the yogurt substantially uniformly throughout the whole muscle meat piece.

The product can then be packaged for dispatched. Alternatively, it may be blended with spices and/or other marinades and packaged. Optionally, the pieces may be further mechanically divided, for example, by being formed into slices.

In yet another alternative, the meat pieces after tumbling may be packaged and/or stuffed and then cooked and/or smoked prior to packaging. Again, the product may be divided further prior to packaging for dispatch.

### Example 1

A pork steak with yogurt product is prepared as described above using the following recipe:

| **Pork Steak with Yogurt** | | |
|---|---|---|
| Boneless Pork Loin | | 73 kg |
| Yogurt Mix for Injection | | |
| | | |
| Yogurt | | 25 kg |
| Salt | | 1,7 kg |
| Pepper | | 0,18 kg |
| Roast flavour | | 0,12 kg |
| **Total** | | 100 kg |

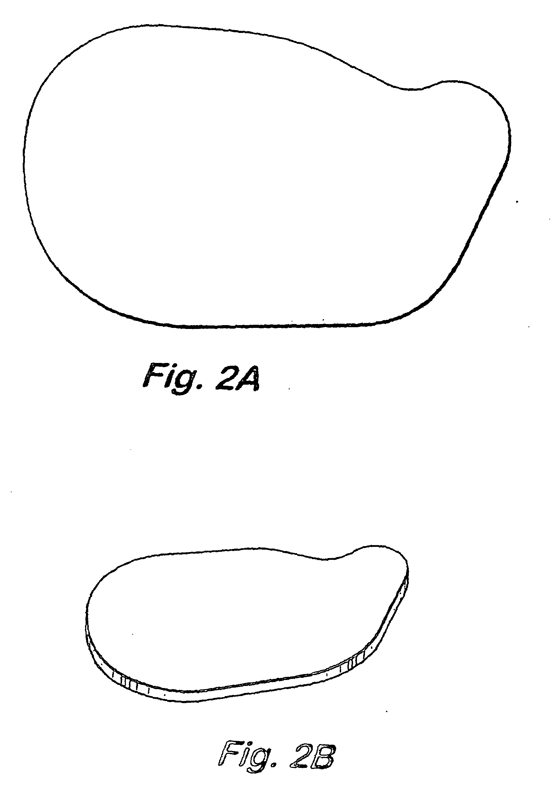

As can be seen, 25 kg yogurt is combined with salt, pepper and a proprietary roast flavour. The yogurt mixture is then injected into 73 kg of boneless pork loin and tumbled. The resultant product is shown schematically in Figure 2a, and a slice through the product having approximately the weight of an individual portion is shown in Figure 2b.

### Example 2

A turkey breast with yogurt and honey product is made following the above procedure, with the following recipe:

| **Turkey Breast with Yogurt and Honey** | | |
|---|---|---|
| | | |
| Turkey breast | | 70 kg |
| | | |
| Yogurt Mix for Injection: | | |
| | | |
| Yogurt | | 24 kg |
| Curing salt | | 2 kg |
| Sodium ascorbate | | 0,3 kg |
| | | |
| Honey | | 3,5 kg |
| Smoke flavour | | 0,2 kg |
| **Total** | | 100 kg |

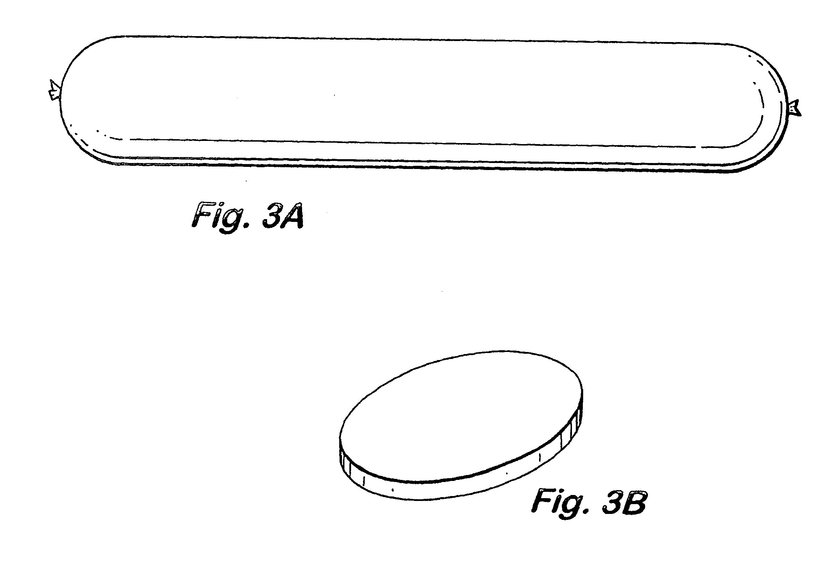

24 kg of yogurt is mixed with curing salt, sodium ascorbate, honey and a proprietary smoke flavour. The yogurt mix is then injected into whole muscle turkey breast portions having a weight of 70 kg. The product is then tumbled and extruded through a stuffing horn into a shirred casing. The resulting product is shown schematically in Figure 3a.

The extruded product is then cooked and smoked as follows:

| **Cooking and Smoking Procedure for Turkey Breast with Yogurt and Honey** | | | | |
|---|---|---|---|---|
| **Step** | **Time** | **Process** | **Temp** | |
| 1 | 30 min | cooking | 45°C | |
| 2 | 30 min | cooking | 55°C | |
| 3 | 10 min | cooking | 60°C | |
| 4 | 10 min | cooking | 65°C | |
| 6 | | cooking | 75°C | to a core temperature of 72°C |
| 7 | Cold water shower for 60 minutes | | | |
| 8 | 30 min | drying | | 50°C |
| 9 | 30 min | smoking | | 50°C |
| 10 | Cooling in chiller for 12 hours | | | |

After cooking and smoking, the casing is stripped from the product which is then sliced and repackaged for dispatch.

## Claims

1. A raw meat product comprising a piece of whole muscle meat, **characterised in that** said piece comprises yogurt distributed substantially uniformly throughout the piece, and said yogurt has a pH of less than 4.0.

2. A meat product as claimed in claim 1, comprising 5 to 50% by weight of injected yogurt.

3. A meat product as claimed in any preceding claim wherein said yogurt comprises 5 to 25% by weight of additional flavourings and/or condiments.

4. A meat product as claimed in any preceding claim wherein said yogurt comprises up to 10% by weight of pre-biotic additive.

5. A process for making a meat product, **characterised by** injecting a piece of whole muscle meat with yogurt, and thereafter mechanically processing the meat to distribute the yogurt substantially uniformly throughout the meat.

6. A process as claimed in claim 5, wherein said yogurt is distributed further throughout the piece of meat by tenderising and/or tumbling.

7. A process as claimed in claim 5 or claim 6, comprising 5 to 50% by weight injected yogurt.

8. A process as claimed in claim 5, claim 6 or claim 7, wherein said yogurt has a pH of less than 5.2, preferably 3.8 to 3.9..

9. A process as claimed in claim 5, claim 6 or claim 7, further comprising cooking the meat product.

10. A process as claimed in claim 9, wherein said product has a pH of not less than 5.0, preferably at least 5.5.

11. A process as claimed in claim 10, wherein the piece of meat is injected with a mild yogurt having a pH of 4.8 to 5.1.

12. A process as claimed in claim 10 or 11, a wherein the yogurt is made using slow working yogurt starter cultures.

13. A process as claimed in claim 10, 11 or 12, **characterised In that** fermentation of said yogurt is incomplete.

14. A process as claimed in claim 10 or 11, wherein the yogurt comprises an edible, alkaline additive to neutralise the acidity of the yogurt.

15. A process as claimed in any of claims 5 to 14, wherein prior to injection the yogurt is treated to destroy yogurt cultures and any other bacteria present in the yogurt.

16. A process as claimed in claim 15, wherein the yogurt is treated by cooling to a temperature in the range -2 to 6°C.

17. A process as claimed in claim 15, wherein the yogurt is treated by heating to a temperature in the range 65 to 70°C.

18. A process as claimed in any of claims 5 to 17, wherein the yogurt is injected into the meat piece using a single needle injector or a multi-needle injector.

## Patentansprüche

1. Rohfleischprodukt, das ein Stück ganzes Muskelfleisch aufweist, **dadurch gekennzeichnet, dass** das Stück Joghurt aufweist, der im Wesentlichen gleichmäßig durch das Stück verteilt ist, wobei der Joghurt einen pH-Wert von weniger als 4,0 aufweist.

2. Fleischprodukt nach Anspruch 1, das 5 bis 50 Gew.-% von eingespritztem Joghurt aufweist.

3. Fleischprodukt nach einem der vorhergehenden Ansprüche, wobei der Joghurt 5 bis 25 Gew.-% zusätzlicher Aroma- und/oder Würzstoffe enthält.

4. Fleischprodukt nach einem der vorhergehenden Ansprüche, wobei der Joghurt bis zu 10 Gew.-% eines präbiotischen Zusatzstoffs aufweist.

5. Verfahren zur Herstellung eines Fleischproduktes, **dadurch gekennzeichnet, dass** in ein Stück eines ganzen Muskelfleisches Joghurt injiziert wird, und danach das Fleisch mechanisch bearbeitet wird, um den Joghurt im Wesentlichen gleichmäßig durch das Fleisch zu verteilen.

6. Verfahren nach Anspruch 5, wobei der Joghurt durch Klopfen und/oder Walken weiter durch das Fleischstück verteilt wird.

7. Verfahren nach Anspruch 5 oder 6, das 5 bis 50 Gew.-% injizierten Joghurt beinhaltet.

8. Verfahren nach Anspruch 5, 6 oder 7, wobei der Joghurt einen pH-Wert von weniger als 5,2 und vorzugsweise von 3,8 bis 3,9 hat.

9. Verfahren nach Anspruch 5, 6 oder 7, das weiter ein Kochen des Fleischproduktes umfasst.

10. Verfahren nach Anspruch 7, wobei das Produkt einen pH-Wert von nicht weniger als 5,0 und vorzugsweise mindestens 5,5 hat.

11. Verfahren nach Anspruch 10, wobei in das Fleischstück ein milder Joghurt mit einem pH-Wert von 4,8 bis 5,1 injiziert wird.

12. Verfahren nach Anspruch 10 oder 11, wobei der Joghurt unter Verwendung von langsam arbeitenden Joghurt-Starterkulturen hergestellt wird.

13. Verfahren nach Anspruch 10, 11 oder 12, **dadurch gekennzeichnet, dass** eine Fermentierung des Joghurts unvollständig ist.

14. Verfahren nach Anspruch 10 oder 11, wobei der Joghurt einen essbaren alkalischen Zusatzstoff beinhaltet, um die Azidität des Joghurts zu neutralisieren.

15. Verfahren nach einem der Ansprüche 5 bis 14, wobei der Joghurt vor dem Injizieren behandelt wird, um Joghurtkulturen und jegliche andere im Joghurt vorhandene Bakterien abzutöten.

16. Verfahren nach Anspruch 15, wobei der Joghurt durch Kühlen auf eine Temperatur zwischen -2° und 6 °C behandelt wird.

17. Verfahren nach Anspruch 15, wobei der Joghurt durch Erhitzen auf eine Temperatur zwischen 65° und 70 °C behandelt wird.

18. Verfahren nach einem der Ansprüche 5 bis 17, wobei der Joghurt in das Fleischstück unter Verwendung einer Einnadel-Injektionseinrichtung oder einer Mehrnadel-Injektionseinrichtung injiziert wird.

## Revendications

1. Produit camé cru comprenant un morceau de viande de muscle entier, **caractérisé en ce que** ledit morceau comprend du yogourt réparti de façon sensiblement uniforme dans le morceau, et ledit yaourt présente un pH inférieur à 4,0.

2. Produit camé selon la revendication 1, comprenant 5 à 50% en poids de yogourt injecté.

3. Produit camé selon l'une quelconque des revendications précédentes, dans lequel ledit yogourt comprend 5 à 25% en poids d'arômes et/ou de condiments supplémentaires.

4. Produit carné selon l'une quelconque des revendications précédentes, dans lequel ledit yogourt comprend jusqu'à 10% en poids d'adjuvant prébiotique.

5. Procédé pour fabriquer un produit camé, **caractérisé par** l'injection d'un morceau de viande de muscle entier avec du yogourt, puis par le traitement mécanique de la viande pour répartir le yogourt de façon sensiblement uniforme dans la viande.

6. Procédé selon la revendication 5, dans lequel ledit yogourt est réparti de plus dans le morceau de viande par attendrissage et/ou passage au tonneau.

7. Procédé selon la revendication 5 ou 6, comprenant 5 à 50% en poids de yogourt injecté.

8. Procédé selon la revendication 5, 6 ou 7, dans lequel ledit yogourt possède un pH inférieur à 5,2, de préférence de 3,8 à 3,9.

9. Procédé selon la revendication 5, 6 ou 7, comprenant en outre la cuisson du produit carné.

10. Procédé selon la revendication 9, dans lequel ledit produit possède un pH pas inférieur à 5,0, de préférence d'au moins 5,5.

11. Procédé selon la revendication 10, dans lequel le morceau de viande est injecté avec un yogourt doux ayant un pH de 4,8 à 5,1.

12. Procédé selon la revendication 10 ou 11, dans lequel le yogourt est fabriqué en utilisant des cultures de germes de yogourt à fermentation lente.

13. Procédé selon la revendication 10, 11 ou 12, **caractérisé en ce que** la fermentation dudit yogourt est incomplète.

14. Procédé selon la revendication 10 ou 11, dans lequel le yogourt comprend un additif basique, comestible pour neutraliser l'acidité du yogourt.

15. Procédé selon l'une quelconque des revendications 5 à 14, dans lequel, avant l'injection, le yogourt est traité pour détruire les cultures de germes de yogourt et toutes autres bactéries présentes dans le yogourt.

16. Procédé selon la revendication 15, dans lequel le yogourt est traité par refroidissement à une température comprise entre -2°C et 6°C.

17. Procédé selon la revendication 15, dans lequel le yogourt est traité par chauffage à une température, dans la gamme de 65°C à 70°C.

18. Procédé selon l'une quelconque des revendications 5 à 17, dans lequel le yogourt est injecté dans le morceau de viande en utilisant un injecteur à aiguille unique ou un injecteur à aiguilles multiples.
